# EUROPEAN PATENT SPECIFICATION

(11) **EP 3 543 780 B1**
(45) Date of publication and mention of the grant of the patent: **12.08.2020**
(21) Application number: 18162454.5
(22) Date of filing: 19.03.2018
(51) Int. Cl.: G02F 1/1503

(54) **ELECTROCHROMIC DEVICE AND METHOD OF ITS MANUFACTURING**
ELEKTROCHROME VORRICHTUNG UND VERFAHREN ZU DEREN HERSTELLUNG
DISPOSITIF ÉLECTROCHROMIQUE ET SON PROCÉDÉ DE FABRICATION

(43) Date of publication of application: 25.09.2019
(73) Proprietor: OKTOPOLYMER LLC, Moscovskaia Oblast, 143030 (RU)
(72) Inventor: PODSHIBYAKIN, Vitaly Alekseevich, 344068 Rostov-na-Donu (RU); SHEPELENKO, Evgeny Nikolaevich, 344103 Rostov-na-Donu (RU)
(74) Representative: Koudine, Andreï

(56) References cited:
- EP-A1- 2 848 670
- RU-C1- 2 642 558
- US-A1- 2015 353 819

## Description

### Technical field of invention.

This invention relates to a field of applied electric chemistry, namely, devices based on modified electrochromic compounds and method of their manufacturing, more specifically, to electrochromic devices comprising two electrodes, at least one of which is optically transparent, said electrodes forming an enclosed space filled with a solution which includes an aprotic inert solvent or their mixtures, an acrylic and/or methacrylic unsaturated oligomer-monomer composition, a cathodic material comprising pyridine, an anodic material, a photo initiator, an adhesive and indifferent electrolytes. This invention can be used, in particular, for manufacturing of various light filters, architectural and vehicle mirrors and windows with electrically controlled light transmission.

This paper uses the following terms and definitions.
**Acrolat,** or ready-to-use unsaturated oligomer-monomer photocurable composition, which are, in essence, a mixture of plasticizing agent, oligomer and monomer reactants and photo initiator. It is preferable to use unsaturated oligomer monomer photocurable compositions normally utilized for manufacturing of impact-resistant triplex glasses for vehicles and construction applications. These are Acrolat 19 (according to Technical Specification TU 2243-069-10488057-2012) manufactured by "NPP Macromer" Ltd (Vladimir, Russia). http://macromer.ru/product/qlass/akrolat-18/
**DRS-250,** or a mercury bulb arc lamp. Mercury quartz lamps are used in optical devices to obtain a high-intensity narrow light beam. These lamps radiate energy both in the visible and the ultraviolet spectrum.
   http://scopica.ru/proj/rtutnaya-lampa-sverhvyisokogo-davleniya-drsh-250-3/
% **Vol.,** per cent by volume,
**M,** moles,
**ITO,** or Indium tin oxide, a semiconductor material which is transparent to visible light thanks to a wide band gap (about 4 eV) but capable of reflecting IR light.
**UV,** or ultraviolet.

### Prior art

The US patent No 4902108 discloses a method of filling two optically transparent electrodes with polymethyl methacrylate mixed with low boiling solvent, said filler having a predetermined film thickness. Then the enclosed space so formed is filled with an electrochromic solution which comprises a cathodic and an anodic components and an indifferent electrolyte in a high boiling solvent. Electrochromic devices based on solid state gel organic compounds are known. (See Russian patents RU2144937; RU2224275; RU100309). The drawbacks of such systems include: an hydrostatic internal pressure, an acidic medium (presence of carboxyl groups in the polymer chain may lead to the formation of dyed protonated varieties of anodic components), a compound phase separation. The combination of all the above drawbacks renders the task of obtaining a long life gel electrochromic compound and derivative devices extremely difficult.

Electrochromic devices based on a polymeric matrix with an electrochromic solution interspersed therein, see US patent No 5888431. A creation of such solid-state matrix is made difficult by a number of intricacies specific to the process. Line prepolymer is first dissolved in an organic solvent. This semi-product is diluted with solution of electrochromic components and additives which include an agent for prepolymer chain linking and an initiator, to lower its viscosity. The volume matrix is formed directly in the device.

A method of manufacturing of electrochromic devices based on solid polymer films is also known. See US patents 6002511; US No 7202987; US No 2013063802. Solid films are formed inside an enclosed inter-electrode space under the influence of electromagnetic radiation, particularly, ultraviolet light. Polymer electrochromic compound formation process is characterized by difficulties in initiating radical polymerization. If polymerized compounds are subjected to ultraviolet light, the initiation process is made much more difficult if the compound includes electrochromic components with considerable light absorption in the photo initiator sensitivity range. Therefore, a possibility of setting initiation under the influence of electromagnetic radiation in a broad wavelength range was considered. However, the diversity of electrochromic monomer compositions renders it impossible to develop an all-purpose method for formation of polychromatic solid film due to a specific nature of electromagnetic radiation spectra.

The US patent No 7202987 describes a combination of ultraviolet polymerization and thermal effect as an additional source of energy for acceleration of setting processes.

The closest prior art is the Russian invention patent No 2642558 published in 2018 which discloses an electrochromic device comprising two electrodes, at least one of which is optically transparent, said electrodes forming an enclosed space filled with a solution which includes an aprotic inert solvent or their mixtures, an acrylic and/or methacrylic unsaturated oligomer-monomer composition, a cathodic material comprising pyridine, an anodic material, a photo initiator, an adhesive and indifferent electrolytes.

This prior art also discloses a method of manufacturing of the electrochromic device comprising two electrodes, at least one of which is optically transparent, said method including following stages which involve: obtaining a true electrochromic solution of a cathodic electrochromic component, an anodic electrochromic component, a photo initiator, an adhesive, an indifferent electrolyte, an unsaturated oligomer-monomer composition in an inert aprotic solvent; filling an enclosed space between the electrodes with the true electrochromic solution; creating the sealed enclosed space between the electrodes filled with the true electrochromic solution; polymerizing the electrochromic solution by an electromagnetic radiation in the visible and/or ultraviolet spectral range to ensure a transition of the molecules of at least one of the electrochromic components to an excited state and a transition of oxygen from a free active state into a bound inactive state; thermally influencing the activated true electrochromic solution to obtain a solid-state electrochromic layer comprising a crosslinked polymer matrix with the filler in the form of the electrochromic solution.

A drawback of the prototype as both a device and a method is low service life of the electrochromic device. Another drawback is low plasticity and resilience of the polymer matrix. Also known are US2015353819 A1 disclosing an electrochromic composition comprising an anti-oxidant and EP2848670 A1 disclosing an aromatic type optical brightening agent in an electrochromic solution

### Disclosure of the invention as a device.

This invention, on the one side, has a primary aim to offer an electrochromic device comprising two electrodes, at least one of which is optically transparent, said electrodes forming an enclosed space filled with a solution which includes an aprotic inert solvent, an unsaturated oligomer-monomer composition, a cathodic electrochromic component, an anodic electrochromic component, a photo initiator, an adhesive and indifferent electrolytes, said device serves at least to mitigate one of the aforementioned drawbacks, namely, to extend the service life of the electrochromic device, which is the technical objective.

For the purpose of reaching the above objective, the solution also includes an optical brightener selected from the range of aromatic or heterocyclic series and/or their mixtures and an antioxidant selected from the range of sterically hindered phenols and/or their mixtures.

This useful features make it possible to extend the service life of the electrochromic device, as the antioxidant prolongs the service life. The optical brightener prolongs the service life too.

There is a version of the invention in that the solution comprises a polymer selected from the following range: polystyrene, polymethyl methacrylate, polyethylene terephthalate, polyvinyl pyrrolidone, their derivatives and/or their mixtures.

This useful feature makes it possible to leverage the advantages of polymer, namely, the improvement of mechanical properties of the polymerized composition.

There is a version of the invention in that the solution comprises a plasticizer selected from the following range: crown ethers and phthalic acid ethers and/or their mixtures.

This useful feature makes it possible to leverage the advantages of plasticizer, namely, its addition to the polymer to increase elasticity or plasticity and resilience of the polymer matrix.

There is a version of the invention in that the solution comprises the optical brightener in the range from 0,001M to 0,002M.

This useful feature makes it possible to specify the range of optical brightener content and to determine which levels condition the most marked effect of extending the service life of the electrochromic device.

There is a version of the invention in that the solution comprises the antioxidant in the range from 0,001M to 0,002M.

This useful feature makes it possible to specify the range of antioxidant content and to determine which levels condition the most marked effect of extending the service life of the electrochromic device.

There is a version of the invention in that the solution comprises the polymer in the range from 1 Vol. % to 20 Vol. %.

This useful feature makes it possible to specify the range of polymer content and to determine which levels condition the most marked effect of increase in elasticity or plasticity and resilience of the polymer matrix of the electrochromic device.

There is a version of the invention in that the solution comprises the plasticizer in the range from 1 Vol. % to 5 Vol. %.

This useful feature makes it possible to specify the range of plasticizer content and to determine which levels condition the most marked effect of increase in elasticity or plasticity and resilience of the polymer matrix of the electrochromic device.

The above levels are selected for the reason that lower concentrations do not produce a visible effect on the properties of the device.

Higher concentrations may bring about solubility and polymerization problems.

### Disclosure of the invention as a method.

This invention, on the other side, has a primary aim to offer a method of manufacturing of an electrochromic device comprising two electrodes, at least one of which is optically transparent, said method including following stages which involve: obtaining a true electrochromic solution of a cathodic electrochromic component, an anodic electrochromic component, a photo initiator, an adhesive, an indifferent electrolyte, an unsaturated oligomer-monomer composition in an inert aprotic solvent; filling an enclosed space between the electrodes with the true electrochromic solution; creating the sealed enclosed space between the electrodes filled with the true electrochromic solution; polymerizing the electrochromic solution by an electromagnetic radiation in the visible and/or ultraviolet spectral range to ensure a transition of the molecules of at least one of the electrochromic components to an excited state and a transition of oxygen from a free active state into a bound inactive state; thermally influencing the activated true electrochromic solution to obtain a solid-state electrochromic layer comprising a crosslinked polymer matrix with the filler in the form of the electrochromic solution, said method serves at least to mitigate one of the aforementioned drawbacks, namely, to extend the service life of the electrochromic device, which is the technical objective.

For the purpose of reaching the above objective, the solution includes an optical brightener selected from the range of aromatic or heterocyclic series and/or their mixtures, an antioxidant selected from the range of sterically hindered phenols and/or their mixtures.

This useful features make it possible to extend the service life of the electrochromic device, as the antioxidant prolongs the service life. The optical brightener prolong the service life too. In addition, it allows to increase a light transmission up to 82%.

There is a version of the invention in that the solution comprises a polymer selected from the following range: polystyrene, polymethyl methacrylate, polyethylene terephthalate, polyvinyl pyrrolidone, their derivative and/or their mixtures.

This useful feature makes it possible to leverage the advantages of polymer, namely, the improvement of mechanical properties of the polymerized composition.

There is a version of the invention in that the solution comprises a plasticizer selected from the following range: crown ethers and phthalic acid ethers and/or their mixtures.

This useful feature makes it possible to leverage the advantages of plasticizer, namely, its addition to the polymer to increase elasticity or plasticity and resilience of the polymer matrix.

There is a version of the invention in that the solution comprises the optical brightener in the range from 0,001M to 0,002M.

This useful feature makes it possible to specify the range of optical brightener content and to determine which levels condition the most marked effect of extending the service life of the electrochromic device.

There is a version of the invention in that the solution comprises the antioxidant in the range from 0,001M to 0,002M.

This useful feature makes it possible to specify the range of antioxidant content and to determine which levels condition the most marked effect of extending the service life of the electrochromic device.

There is a version of the invention in that the solution comprises the polymer in the range from 1 Vol. % to 20 Vol. %.

This useful feature makes it possible to specify the range of polymer content and to determine which levels condition the most marked effect of increase in elasticity or plasticity and resilience of the polymer matrix of the electrochromic device.

There is a version of the invention in that the solution comprises the plasticizer in the range from 1 Vol. % to 5 Vol. %.

This useful feature makes it possible to specify the range of plasticizer content and to determine which levels condition the most marked effect of increase in elasticity or plasticity and resilience of the polymer matrix of the electrochromic device.

### Brief description of drawings.

Other distinguishing features and advantages of the invention are readily apparent from the description below which includes but is not limited to the following features, with reference to the figures attached:
- Figure 1 is a diagram of the electrochromic device according to the invention,
- Figure 2 is a diagram showing the stages of the method according to the invention,

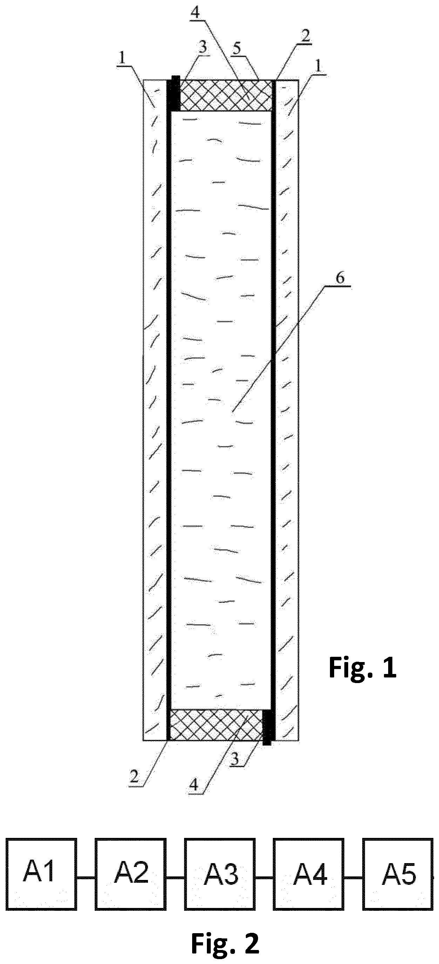

The Figure 1 shows:
1 - a solid liner with electroconductive coating;
2 - a spacer;
3 - contacts;
4 - butyl rubber sealing compound;
5 - polysulfide sealing compound;
6 - solution (electrochromic composition).

### Embodiment of the invention as a device.

An electrochromic device comprises two electrodes, at least one of which is optically transparent; said electrodes forming an enclosed space filled with a solution which includes:
- an aprotic inert solvent, as well as their mixtures, from 30 Vol. % to 70 Vol. % (propylene carbonate, dimethyl formamide, sulfurane, dimethyl sulfoxide, ethoxyethanol, polyester, ethylene carbonate, diethyl carbonate, fluoroethylene carbonate, dimethyl carbonate, dipropyl carbonate, dimethyl sulfoxide, acetonitrile, dimethoxyethane, diethoxyethane, tetrahydrofuran, N-methyl-2-pyrrolidone, ethylmethyl carbonate, gamma-butyrolactone, methyl formiate, propylacetate, ethylformiate, propylformiate, methylacetate, ethylacetate, pentylacetate, methylpropionate, ethylpropionate, propylpropionate and butylpropionate);
- an unsaturated oligomer-monomer composition (and/or a methacrylic unsaturated oligomer-monomer composition, from 30 Vol. % to 70 Vol;
- a cathodic electrochromic component (for example, a cathodic material comprising pyridine, said material having at least one reversible current-voltage reduction wave on polarograms (perchlorates; 4,4'-dipyridinium, 2,2'-dipyridinium, bis-1,1'-dipyridinium with an alkylene group linking nitrogen atoms with 1-10 carbon atoms, bis-2,2'-pyridinium or bis 4,4'-pyridinium tetrafluoroborates or hexafluorophosphates with a linking phenylene group or ketogroup), from 0,001M to 0,2M);
- an anodic electrochromic component (for example, the anodic material having at least one reversible current-voltage oxidation wave on polarograms (ferrocene, its derivatives and their mixtures, ferrocene oil; 5,10-dihydro-5,10-dimethylphenazine, its derivatives or their mixtures; phenothiazines, phenoxazines, benzothiazoles, their derivatives or their mixtures), from 0,001M to 0,2M);
- a photo initiator (benzoin, benzyl ketals, aroylphosphine oxides, amino alkyl phenons, aliphatic and aromatic ketones and their mixtures), from 0,001M to 0,020M;
- an adhesive (organofunctional silanes), from 1 Vol. % to 10% Vol. %;
- indifferent electrolytes (perchlorates, tetrafluoroborates, hexafluorophosphates or triphenylcyanborates of alkaline or alkaline earth metals, tetraalkylammonium with alkyl groups with 1-4 carbon atoms, as well as their mixtures), from 0,005M to 0.5M;
- an optic brightener (from aromatic or heterocyclic series, as well as their mixtures), from 0,001M to 0,002M;
- an antioxidant (from the class of sterically hindered phenols, as well as their mixtures), from 0,001M to 0,002M;
- a plasticizer (crown ethers and phthalic acid ethers, as well as their mixtures), from 0,1Vol. % to 5Vol. %;
- a polymer selected from the following range: polystyrene, polymethyl methacrylate, polyethylene terephthalate, polyvinyl pyrrolidone, their derivative and/or their mixtures.

The use of mixed compositions serves to create a variety of spectral characteristics or colors and shades of the electrically activated state of the electrochromic layer in the inter-electrode space. The concentrations of cathodic and anodic components are determined by the type of electrochromic device and given electrical and optic parameters, so they may range from 0,001M to 0,2M.

The cathodic electrochromic component is an individual electrochromic compound or a mixture of organic compounds capable of reversible reduction in the cathodic potentials area.

Such organic compounds are quaternary salts of dipyridinium, perchlorates, 4,4'-dipyridinium, 2-2'-dipyridinium, bis-1,1'-dipyridinium with an alkylene group linking nitrogen atoms with 1-10 carbon atoms, bis-2,2'-pyridinium or bis 4,4'-pyridinium tetrafluoroborates or hexafluoroborates with a linking phenylene group or ketogroup.

Alkyl groups with 1-10 carbon atoms, phenyl and benzyl groups which, in their turn, may comprise alkyl substitutions in positions 2, 3, 4, 5, 6 (carbon atoms 1-4), diverse halogenides (CI, Br, I) may be used as quaternizing groups of pyridine rings. Alcoxy and cyano groups, alkylene linking groups with 2-4 carbon atoms for 2,2'-dipyridinium derivatives can also be used. Pyridine rings can also comprise substitutes (listed above), provided that each one of them differs from any other in positions 2,3,4,5.

The anodic electrochromic component is an individual electrochromic compound or a mixture of organic compounds capable of reversible reduction in the anodic potentials area.

Anodic electrochromic components include ferrocene and its derivatives comprising several independent from each other substitutes in the cyclopentadienil ring. Such substitutes are alkyl groups with 1-10 carbon atoms, phenyl groups, alkylphenyl groups with 1-4 carbon atoms in the alkyl group, alcoxy groups with 1-10 carbon atoms, alcoxyphenyl groups with 1-4 carbon atoms in the alcoxy group, benzyl groups, alkyl benzyl groups with 1-4 carbon atoms in the alkyl group, halogenidephenyl groups, phenylcarboxyl groups, nitrophenyl groups, carboxamide groups, acyl groups, ariloyl groups or acyl(aril)alkyl groups.

1,1-diethyl ferrocene or ferrocene oil can also be used.

Besides, tertiary alkyl amines or alkyl arilyl amines as well as heterocyclic compounds from the class of phenazines, phenoxazines, phenothiazines can also be used as anodic electrochromic component. Anodic electrochromic component may be in the form of 5,10-dihydro-5,10-dimethylphenazine, its derivatives or their mixtures.

The following compounds can be used as the inert aprotic solvent: propylene carbonate, dimethyl formamide, sulfurane, dimethyl sulfoxide, ethoxyethanol, polyester, ethylene carbonate, diethyl carbonate, fluoroethylene carbonate, dimethyl carbonate, dipropyl carbonate, dimethyl sulfoxide, acetonitrile, dimethoxyethane, diethoxyethane, tetrahydrofuran, N-methyl-2-pyrrolidone, ethylmethyl carbonate, gamma-butyrolactone, methyl formiate, propylacetate, ethylformiate, propylformiate, methylacetate, ethylacetate, pentylacetate, methylpropionate, ethylpropionate, propylpropionate and butylpropionate and their mixtures. Concentrations may vary from 30 Vol. % to 70 Vol. %, preferably: 40 Vol. % - 60 Vol. %.

It is preferable to use an acrylic unsaturated oligomer-monomer composition and/or methacrylic unsaturated oligomer-monomer composition as the unsaturated oligomer-monomer composition.

To obtain said true solution, the acrylic and/or methacrylic unsaturated oligomer-monomer composition and the photo initiator are joined together as a compound. Concentrations may vary from 30 Vol. % to 70 Vol. %, preferably: 40 Vol. % - 60 Vol. %
Thermal and photochemical initiators, as well as their mixtures may be used as polymerization initiators. For example, 2,2-dimethoxy-1,2-diphenylethane-1-on or 1-hydroxy-cyclohexyl-phenyl-ketone may be used in the amount sufficient to polymerize the true solution.

Silicate glass or polymer plates are used as solid liners for the electrodes. The polymer material for the plates is selected from the group comprising polyimide, polyethylene terephthalate and polycarbonate.

Electroconductive coatings from doped transition metal oxides on solid liners are used as the electrodes.

The electroconductive coating may be selected from the group comprising spacered indium oxide In₂O₃:SnO₂, doped tin oxide SnO₂:F or doped zinc oxide ZnO:Ga.

A gap between the electrodes in the electrochromic device equals to 0,03 - 1 mm, preferably 0,04 - 0.6 mm.

A variety of additives may be introduced to the true electrochromic solution to obtain an electrochromic device resistant to mechanical, physical and chemical impacts. To obtain a required ion conductivity of the solid-state layer, indifferent electrolytes may be introduced to the original electrochromic solution to stabilize electrically activated varieties of the electrochromic components under high temperatures during long polarization by direct voltage and under increased voltages. Electrolytes serve to increase the reversibility of coloration/discoloration processes, especially in larger electrochromic devices. Indifferent electrolytes may be organic and inorganic salts: perchlorates, tetrafluoroborates, hexafluorophosphates or triphenylcyanborates of alkaline or alkaline earth metals, tetraalkylammonium with alkyl groups with 1-4 carbon atoms, as well as their mixtures. The amount of added electrolytes may be 0,005M - 0.5M, preferably - 0.01M - 0.1M.

Crown ethers and phthalic acid ethers are used as additional plasticizers which leads to increased ion conductivity of the polymer matrix and, as a result, accelerates the electrochromic device. The amount of added plasticizers may range from 0.1 Vol. % to 5Vol. %.

For the purpose of improvement of physical properties of the resulting compound (adhesion, cohesion and related plasticity and resilience of the polymer matrix with space-network structure), true electrochromic solutions may additionally comprise additives from organic compounds from the silane group (organofunctional silane), which are used as structuring and crosslinking agents, surface modifiers and adhesion promoters, improving physical properties and thermal stability. The preferred compounds are 3-methacryloxypropyl trimethoxysilane and 3-glycydoxypropyl trimethoxysilane. Concentration of structuring additives, which are, in essence, organofunctional silanes, may range from 1Vol. % to 10Vol. %.

To protect electrochromic compound from oxidants, including adsorbed air oxygen, sterically hindered phenols were additionally introduced. Concentration of protective additives may range from 0,001M to 0,002M.

To protect the electrochromic device from short wavelength ultraviolet radiation and to brighten the polymer matrix, optical brighteners from the aromatic and heterocyclic series were introduced. Their concentration ranges from 0,001M to 0,002M.

To obtain a higher-density electrochromic solution and a film-electrolyte with a more plastic and resilient polymer matrix, ready-to-use polymer compositions may be added. These include polystyrene, polymethyl methacrylate, polyethylene terephthalate, polyvinyl pyrrolidone, their derivatives and mixtures. Their amount may range from 1 Vol. % to 20Vol. %, preferably 5Vol. %-10Vol. %.

### Embodiment of the invention as a method.

A method of manufacturing of an electrochromic device comprising two electrodes at least one of which is optically transparent, said method including following stages which involves, according to Figure 2:
**Stage A1** Obtaining a true electrochromic solution of
   - a cathodic electrochromic component,
   - an anodic electrochromic component,
   - a photo initiator,
   - an adhesive,
   - an indifferent electrolyte,
   - an unsaturated oligomer-monomer composition,
   - in an inert aprotic solvent;
   - an optic brightener from 0,001M to 0,002M which is selected from aromatic or heterocyclic series and/or their mixtures,
   - an antioxidant from 0,001M to 0,002M which is selected from the class of sterically hindered phenols and/or their mixtures,
   - a polymer from 1 Vol. % to 20 Vol. %. which is selected from the following range: polystyrene, polymethyl metacrylate, polyethylene terephthalate, polyvinyl pyrrolidone, their derivatives and/or their mixtures, and
   - a plasticizer from 1 Vol. % to 5 Vol. % which is selected from crown ethers and phthalic acid ethers and/or their mixtures.
**Stage A2.** Filling an enclosed space between the electrodes with the true electrochromic solution.
**Stage A3.** Creating the sealed enclosed space between the electrodes filled with the true electrochromic solution.
**Stage A4.** Polymerizing the electrochromic solution by electromagnetic radiation in the visible and/or ultraviolet spectral range to ensure a transition of molecules of at least one of the electrochromic components to an excited state and a transition of oxygen from a free active state to the bound inactive state.
**Stage A5.** Thermally influencing the activated true electrochromic solution to obtain a solid-state electrochromic layer comprising a crosslinked polymer matrix with the filler in the form of the electrochromic solution.

### Industrial applicability.

According to the invention, industrial prototypes were manufactured, see examples below.

### Example 1

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of lithium perchlorate and 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate.

The internal volume of the device was filled with the original electrochromic solution under pressure, i.e. the solution was not filled by gravity but by the application of force.

After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 2

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of sodium perchlorate, 0,005M tetrabutyl ammonium perchlorate and 0,015M of sodium tetrafluoroborate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1,5 and 2 minutes, respectively. When the device was conditioned under the UV light from DRS-250 lamp for 30 minutes, no changes were registered. When the device was opened, the electrochromic layer looked like a solid-state polymer film.

### Example 3

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate,
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of lithium perchlorate and 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 4

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate,
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of sodium perchlorate, 0,005M tetrabutyl ammonium perchlorate and 0,015M of sodium tetrafluoroborate,
- a photo initiator: 0,005M of 2,2-dimethoxy-1,2-diphenylethane-1-on,
- an adhesive: 2Vol. % of 3-methacryloxypropyl trimethoxysilane,
- a plasticizer: 3 Vol. % of diethyl phthalate,
- an antioxidant: 0,001M of ionol.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1,5 and 2 minutes, respectively. When the device was conditioned under the UV light from DRS-250 lamp for 30 minutes, no changes were registered. When the device was opened, the electrochromic layer looked like a solid-state polymer film.

### Example 5

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of lithium perchlorate and 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol.
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 6

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate,
- a methacrylic unsaturated oligomer-monomer composition: 45 Vol. % of Acrolat 18,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of sodium perchlorate, 0,005M tetrabutyl ammonium perchlorate and 0,015M of sodium tetrafluoroborate,
- a photo initiator: 0,005M of 2,2-dimethoxy-1,2-diphenylethane-1-on,
- an adhesive: 2Vol. % of 3-methacryloxypropyl trimethoxysilane,
- a plasticizer: 3 Vol. % of diethyl phthalate,
- an antioxidant: 0,001M of ionol
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 82%. After the voltage of 1V was applied, the device acquired the black color, while light transmission was 10%, and the time of coloring/discoloration was 1,5 and 2 minutes, respectively. When the device was conditioned under the UV light from DRS-250 lamp for 30 minutes, no changes were registered. When the device was opened, the electrochromic layer looked like a solid-state polymer film.

### Example 7

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of lithium perchlorate, 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol.
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 81%. After the voltage of 1V was applied, the device acquired the black color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 8

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,008M of 5,10-dihydro-5,10-dimethyl phenazine,
- a cathodic electrochromic component: 0,010M of 1,1'-dibenzyl-4,4'-dipyridinium diperchlorate and 0,0030M of 1,1"-(1,3-propanediyl)bis[1'-methyl-4,4'bipyridinium] tetraperchlorate,
- an indifferent electrolyte: 0,015M of sodium perchlorate, 0,005M tetrabutyl ammonium perchlorate and 0,015M of sodium tetrafluoroborate,
- a photo initiator: 0,005M of 2,2-dimethoxy-1,2-diphenylethane-1-on,
- an adhesive: 2Vol. % of 3-methacryloxypropyl trimethoxysilane,
- a plasticizer: 3 Vol. % of diethyl phthalate,
- an antioxidant: 0,001M of ionol,
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 81%. After the voltage of 1V was applied, the device acquired the black color, while light transmission was 10%, and the time of coloring/discoloration was 1,5 and 2 minutes, respectively. When the device was conditioned under the UV light from DRS-250 lamp for 30 minutes, no changes were registered. When the device was opened, the electrochromic layer looked like a solid-state polymer film.

### Example 9

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,008M of 5,10-dihydro-5,10-dimethyl phenazine,
- a cathodic electrochromic component: 0,015M of 1,1'-dibenzyl-4,4'-dipyridinium diperchlorate,
- an indifferent electrolyte: 0,015M of lithium perchlorate, 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol,
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 79%. After the voltage of 1V was applied, the device acquired the black color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 10

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included 0,005M of ferrocene, 0,010M of 1,1'-dibenzyl-4,4'-dipyridinium diperchlorate, 0,015M of lithium perchlorate, 0,015M of lithium perchlorate, 0,015M of lithium perchlorate, 0,005M of tetrabutyl ammonium perchlorate, 2Vol. % of adhesive (3-methacryloxypropyl trimethoxysilane), an optical brightener 0,001M (terphenyl), sterically hindered phenol 0,001M (ionol), in the mixture of 50 Vol. % propylene carbonate, 3 Vol. % diethylphthalate, 35 Vol. % of methacrylic unsaturated oligomer-monomer composition (Acrolat 18) and 10Vol. % of polymethyl methacrylate.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,005M of ferrocene,
- a cathodic electrochromic component: 0,010M of 1,1'-dibenzyl-4,4'-dipyridinium diperchlorate,
- an indifferent electrolyte: 0,015M of lithium perchlorate, 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol.
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 79%. After the voltage of 1,2V was applied, the device acquired the blue color, while light transmission was 20%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 11

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,005M of ferrocene,
- a cathodic electrochromic component: 0,016M of 1,1'-dibenzyl-4,4'-dipyridinium diperchlorate,
- an indifferent electrolyte: 0,015M of lithium perchlorate, 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol.
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 79%. After the voltage of 1,2V was applied, the device acquired the purple color, while light transmission was 15%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

### Example 12

An electrochromic device has been manufactured, said device comprising two optically transparent ITO electrodes, having surface resistance of 30 Ohm/square, the thickness of the glass liner being 4 mm. The size of the electrodes was 148x210 mm. The inter-electrode space was formed by a butyl rubber-based sealing compound; 0,4mm thick nylon twine was used as spacer.

The electrochromic solution included:
- an inert aprotic solvent: 50 Vol. % of propylene carbonate
- a methacrylic unsaturated oligomer-monomer composition: 45 Vol. % of Acrolat 18,
- a polymer: 10Vol. % polymethyl methacrylate,
- an anodic electrochromic component: 0,008M of 5,10-dihydro-5,10-dimethyl phenazine,
- a cathodic electrochromic component: 0,0033M of 1,1"-(1,3-propanediyl)bis[1'-methyl-4,4'bipyridinium] tetraperchlorate,
- an indifferent electrolyte: 0,015M of lithium perchlorate, 0,005M tetrabutyl ammonium perchlorate,
- a photo initiator: 0,005M of 2,2-dimethoxy-1,2-diphenylethane-1-on,
- an adhesive: 2Vol. % of 3-methacryloxypropyl trimethoxysilane,
- an optic brightener: 0,001M of terphenyl,
- a plasticizer: 3 Vol. % of diethyl phthalate,
- an antioxidant: 0,001M of ionol,
- an optic brightener: 0,001M of terphenyl.

The internal volume of the device was filled with the original electrochromic solution under pressure. After filling, the opening in the seam was sealed with butyl rubber and polysulfide sealing agent.

The filled device was conditioned for 90 minutes under ultraviolet light, radiation intensity being 10 W/m2 in the range of 320 - 400 nm, then in the thermal chamber at 70°C. Light transmission of the device in the visible spectrum range before and after radiation was 80%. After the voltage of 1V was applied, the device acquired the brown color, while light transmission was 10%, and the time of coloring/discoloration was 1 and 3 minutes, respectively. When the device was conditioned under the UV light from DRS-250 lamp for 30 minutes, no changes were registered. When the device was opened, the electrochromic layer looked like a solid-state polymer film.

The tests of industrial prototypes of the device according to Examples 1-12 demonstrated that these devices are electrochromic devices resistant to degradation processes initiated by sunlight, with their light transmission up to 82% and service life exceeding that of the similar devices (up to 5 years).

Therefore, the invention reaches the technical objective, namely, to increase service life of the electrochromic device.

An additional technical result is increased plasticity and resilience of the polymer matrix.

## Claims

1. An electrochromic device comprising two electrodes, at least one of which is optically transparent, said electrodes forming an enclosed space filled with a solution which includes
• an aprotic inert solvent,
• an unsaturated oligomer-monomer composition,
• a cathodic electrochromic component,
• an anodic electrochromic component,
• a photo initiator,
• an adhesive,
• electrolytes,
***characterized in that*** the solution also includes
• an optical brightener selected from the range of aromatic or heterocyclic series and/or their mixtures,
• an antioxidant selected from the range of sterically hindered phenols and/or their mixtures.

2. The electrochromic device according to claim 1, ***characterized in that*** said solution comprises a polymer selected from the following range: polystyrene, polymethyl methacrylate, polyethylene terephthalate, polyvinyl pyrrolidone, their derivatives and/or their mixtures.

3. The electrochromic device according to claim 1, ***characterized in that*** said solution comprises a plasticizer selected from the following range: crown ethers and phthalic acid ethers and/or their mixtures.

4. The electrochromic device according to claim 1, ***characterized in that*** said solution comprises the optical brightener in the range from 0,001M to 0.002M, wherein M is a mole.

5. The electrochromic device according to claim 1, ***characterized in that*** said solution comprises the antioxidant in the range from 0,001M to 0.002M, wherein M is a mole.

6. The electrochromic device according to claim 2, ***characterized in that*** said solution comprises the polymer in the range from 1 Vol. % to 20 Vol. %.

7. The electrochromic device according to claim 3, ***characterized in that*** said solution comprises the plasticizer in the range from 1 Vol. % to 5 Vol. %.

8. A method of manufacturing of an electrochromic device comprising two electrodes, at least one of which is optically transparent, said method including following stages which involve:
• obtaining a electrochromic solution of
• a cathodic electrochromic component,
• an anodic electrochromic component,
• a photo initiator,
• an adhesive,
• an electrolyte,
• an unsaturated oligomer-monomer composition,
in an inert aprotic solvent,
• filling an enclosed space between the electrodes with the electrochromic solution,
• creating the sealed enclosed space between the electrodes filled with the true electrochromic solution,
• polymerizing the electrochromic solution by an electromagnetic radiation in the visible and/or ultraviolet spectral range to ensure a transition of molecules of at least one of the electrochromic components to an excited state and a transition of oxygen from a free active state into a bound inactive state,
• thermally influencing the activated true electrochromic solution to obtain a solid-state electrochromic layer comprising a crosslinked polymer matrix with the filler in the form of the electrochromic solution,
***characterized in that*** said solution includes an optical brightener selected from the range of aromatic or heterocyclic series and/or their mixtures, an antioxidant selected from the range of sterically hindered phenols and/or their mixtures.

9. The method according to claim 8, ***characterized in that*** said solution includes a polymer selected from the following range: polystyrene, polymethyl methacrylate, polyethylene terephthalate, polyvinyl pyrrolidone, their derivatives and/or their mixtures.

10. A method according to claim 8, ***characterized in that*** said solution includes a plasticizer selected from the following range: crown ethers and phthalic acid ethers and/or their mixtures.

## Patentansprüche

1. Elektrochrome Vorrichtung, umfassend zwei Elektroden, von denen mindestens eine optisch transparent ist, wobei die Elektroden einen geschlossenen Raum bilden, der mit einer Lösung gefüllt ist, die Folgendes umfasst:
• ein aprotisches inertes Lösungsmittel,
• eine ungesättigte Oligomer-Monomer-Zusammensetzung,
• eine kathodische elektrochrome Komponente,
• eine anodische elektrochrome Komponente,
• einen Photoinitiator,
• einen Klebstoff,
• Elektrolyte,
***dadurch gekennzeichnet, dass*** die Lösung auch Folgendes umfasst:
• einen optischen Aufheller, ausgewählt aus dem Bereich der aromatischen oder heterocyclischen Reihen und/oder deren Mischungen,
• ein Antioxidationsmittel, ausgewählt aus dem Bereich der sterisch gehinderten Phenole und/oder deren Mischungen.

2. Elektrochrome Vorrichtung nach Anspruch 1, ***dadurch gekennzeichnet, dass*** die Lösung ein Polymer umfasst, das aus dem folgenden Bereich ausgewählt ist:
Polystyrol, Polymethylmethacrylat, Polyethylenterephthalat, Polyvinylpyrrolidon, deren Derivate und/oder deren Mischungen.

3. Elektrochrome Vorrichtung nach Anspruch 1, ***dadurch gekennzeichnet, dass*** die Lösung einen Weichmacher umfasst, der aus dem folgenden Bereich ausgewählt ist:
Kronenether und Phthalsäureether und/oder deren Mischungen.

4. Elektrochrome Vorrichtung nach Anspruch 1, ***dadurch gekennzeichnet, dass*** die Lösung den optischen Aufheller im Bereich von 0,001 M bis 0,002 M umfasst, wobei M ein Mol ist.

5. Elektrochrome Vorrichtung nach Anspruch 1, ***dadurch gekennzeichnet, dass*** die Lösung das Antioxidationsmittel im Bereich von 0,001 M bis 0,002 M umfasst, wobei M ein Mol ist.

6. Elektrochrome Vorrichtung nach Anspruch 2, ***dadurch gekennzeichnet, dass*** die Lösung das Polymer im Bereich von 1 Vol.-% bis 20 Vol.-% umfasst.

7. Elektrochrome Vorrichtung nach Anspruch 3, ***dadurch gekennzeichnet, dass*** die Lösung den Weichmacher im Bereich von 1 Vol.-% bis 5 Vol.-% umfasst.

8. Verfahren zur Herstellung einer elektrochromen Vorrichtung, umfassend zwei Elektroden, von denen mindestens eine optisch transparent ist, wobei das Verfahren die folgenden Schritte umfasst:
• Erhalten einer elektrochromen Lösung aus
• einer kathodischen elektrochromen Komponente,
• einer anodischen elektrochromen Komponente,
• einem Photoinitiator,
• einem Klebstoff,
• einem Elektrolyt,
• einer ungesättigten Oligomer-Monomer-Zusammensetzung, in einem inerten aprotischen Lösungsmittel,
• Füllen eines geschlossenen Raumes zwischen den Elektroden mit der elektrochromen Lösung,
• Erzeugen des abgedichteten, geschlossenen Raumes zwischen den Elektroden, der mit der echten elektrochromen Lösung gefüllt ist,
• Polymerisieren der elektrochromen Lösung durch eine elektromagnetische Strahlung im sichtbaren und/oder ultravioletten Spektralbereich, um einen Übergang von Molekülen mindestens einer der elektrochromen Komponenten in einen angeregten Zustand und einen Übergang von Sauerstoff aus einem freien aktiven Zustand in einen gebundenen inaktiven Zustand zu gewährleisten,
• thermisches Beeinflussen der aktivierten echten elektrochromen Lösung, um eine elektrochrome Schicht im festen Zustand zu erhalten, die eine vernetzte Polymermatrix mit dem Füllstoff in Form der elektrochromen Lösung umfasst,
***dadurch gekennzeichnet, dass*** die Lösung Folgendes umfasst: einen optischen Aufheller, der ausgewählt ist aus dem Bereich der aromatischen oder heterocyclischen Reihen und/oder deren Mischungen, ein Antioxidationsmittel, das ausgewählt ist aus dem Bereich der sterisch gehinderten Phenole und/oder deren Mischungen.

9. Verfahren nach Anspruch 8, ***dadurch gekennzeichnet, dass*** die Lösung ein Polymer umfasst, das aus dem folgenden Bereich ausgewählt ist:
Polystyrol, Polymethylmethacrylat, Polyethylenterephthalat, Polyvinylpyrrolidon, deren Derivate und/oder deren Mischungen.

10. Verfahren nach Anspruch 8, ***dadurch gekennzeichnet, dass*** die Lösung einen Weichmacher umfasst, der aus dem folgenden Bereich ausgewählt ist:
Kronenether und Phthalsäureether und/oder deren Mischungen.

## Revendications

1. Dispositif électrochrome comprenant deux électrodes, dont l'une entre elles est optiquement transparente, ces électrodes formant une enceinte close remplie d'une solution incluant :
• un solvant inerte aprotique,
• une composition oligomère-monomère insaturée,
• un composant électrochrome cathodique,
• un composant électrochrome anodique,
• un photoinitiateur,
• un adhésif,
• électrolytes,
***caractérisé en ce que*** la solution inclut également
• un éclaircissant optique choisi parmi une gamme des séries aromatique ou hétérocyclique et/ou leurs mélanges,
• un antioxydant choisi parmi une gamme des phénols stériquement encombrés et/ou leurs mélanges.

2. Dispositif électrochrome selon la revendication 1, ***caractérisé en ce que*** ladite solution comprend un polymère choisi parmi la gamme suivante :
polystyrène, polyméthacrylate de méthyle, polyéthylène téréphtalate, polyvinyle pyrrolidone, leurs dérivés et/ou leurs mélanges.

3. Dispositif électrochrome selon la revendication 1, ***caractérisé en ce* que** ladite solution comprend un plastifiant choisi parmi la gamme suivante : éthers-couronne et éthers d'acide phtalique et/ou leurs mélanges.

4. Dispositif électrochrome selon la revendication 1, ***caractérisé en ce que*** ladite solution comprend l'éclaircissant optique variant de 0,001M à 0,002M, où M est une mole.

5. Dispositif électrochrome selon la revendication 1, ***caractérisé en ce que*** ladite solution comprend l'antioxydant variant de 0,001M à 0,002M, où M est une mole.

6. Dispositif électrochrome selon la revendication 2, ***caractérisé en ce que*** ladite solution comprend le polymère variant de 1 Vol. % à 20 Vol. %.

7. Dispositif électrochrome selon la revendication 3, ***caractérisé en ce que*** ladite solution comprend le plastifiant variant de 1 Vol. % à 5 Vol. %.

8. Procédé de fabrication d'un dispositif électrochrome comprenant deux électrodes, dont l'une au moins entre elles est optiquement transparente, ce procédé incluant des étapes suivantes comprenant :
• obtention d'une solution électrochrome
∘ d'un composant électrochrome cathodique,
∘ d'un composant électrochrome anodique,
∘ d'un photoinitiateur,
∘ d'un adhésif,
∘ d'un électrolyte,
∘ d'une composition oligomère-monomère insaturée,
dans un solvant inerte aprotique,
• remplissage d'une enceinte close entre les électrodes avec de la solution électrochrome,
• création de l'enceinte close hermétique entre les électrodes remplie avec de la solution électrochrome véritable,
• polymérisation de la solution électrochrome par un rayonnement électromagnétique dans la plage spectrale visible and/ou ultraviolette afin d'assurer une transition des molécules de l'un au moins des composants électrochromes dans un état excité et une transition d'oxygène d'un état libre actif vers un état inactif lié,
• traitement thermique de la solution électrochrome véritable activée afin d'obtenir une couche électrochrome à l'état solide comprenant une matrice polymérique réticulée avec le remplisseur en forme de la solution électrochrome,
***caractérisé en ce que*** ladite solution inclut un éclaircissant optique choisi parmi une gamme des séries aromatique ou hétérocyclique et/ou leurs mélanges, un antioxydant choisi parmi une gamme des phénols stériquement encombrés et/ou leurs mélanges.

9. Procédé de fabrication selon la revendication 8, ***caractérisé en ce que*** ladite solution inclut un polymère choisi parmi la gamme suivante : polystyrène, polyméthacrylate de méthyle, polyéthylène téréphtalate, polyvinyle pyrrolidone, leurs dérivés et/ou leurs mélanges.

10. Procédé de fabrication selon la revendication 8, ***caractérisé en ce que*** ladite solution inclut un plastifiant choisi parmi la gamme suivante : éthers-couronne et éthers d'acide phtalique et/ou leurs mélanges.
